# EUROPEAN PATENT APPLICATION

(11) **EP 4 501 479 A1**
(43) Date of publication of application: **05.02.2025**
(21) Application number: 23842634.0
(22) Date of filing: 07.04.2023
(51) Int. Cl.: B21B 15/00, B21B 1/22, B21B 38/00

(54) **EQUIPMENT FOR CUTTING STEEL STRIPS, COLD ROLLING EQUIPMENT, METHOD FOR CUTTING STEEL STRIPS, AND METHOD FOR PRODUCING STEEL STRIPS**

(30) Priority: 19.07.2022 JP 2022115034
(71) Applicant: JFE Steel Corporation, Tokyo 100-0011 (JP)
(72) Inventor: FUKUNAGA, Takayuki, Tokyo 100-0011 (JP); HARAZONO, Manabu, Tokyo 100-0011 (JP)
(74) Representative: Hoffmann Eitle
(86) International application number: PCT/JP2023/014430
(87) International publication number: WO 2024/018700

(57) **Abstract**

Cutting equipment for steel strips (1), the cutting equipment including: a cutting device (4) configured to laser cut a vicinity of a joint portion (2) in which a rear end of a preceding steel strip and a front end of a succeeding steel strip are joined that has been detected by a joint portion detection device (5), and a vicinity of a defective portion of the steel strips that has been detected by a defect detection device (8); and a control unit (9), wherein the control unit includes a plurality of modes, including a first cut mode that causes laser cutting in the vicinity of the joint portion, and a second cut mode that causes laser cutting in the vicinity of the defective portion, and the control unit operates the cutting device in accordance with one cut mode in the plurality of modes.

## Description

### TECHNICAL FIELD

The present disclosure relates to cutting equipment for steel strips, a cold rolling line, a method of cutting steel strips, and a method of producing steel strips.

### BACKGROUND

In cold rolling processes of steel strips, it is common practice to join rear ends of preceding materials (preceding steel strips) and front ends of succeeding materials (succeeding steel strips) and continuously feed them to cold rolling lines for the purpose of improving productivity or yield rates. This allows for rolling in a state in which tension is applied over the entire lengths of the steel strips, whereby sheet thicknesses and shapes can be controlled with high accuracy even at the front ends and the rear ends of the steel strips.

At end portions in a sheet transverse direction of joint portions (welded portions) between the preceding materials and the succeeding materials, widthwise stepped portions are inevitably formed due to differences in steel strip width, differences in steel strip thickness, misalignment, or the like between the preceding materials and the succeeding materials. For this reason, when rolling is performed in this state, stress concentration may occur at the widthwise stepped portions, thus possibly leading to fractures at the joint portions. When the fractures occur at the joint portions, productivity decreases because the cold rolling lines have to be stopped, while production costs increase because work rolls damaged by fractured pieces need to be replaced. Furthermore, there may be defective portions in the steel strips that are created during the production processes. To address the defective portions, a method of not rolling the defective portions or a method of manually removing the defective portions may be employed. Both the methods result in stoppage of the cold rolling lines or decrease in productivity.

In view of the above, to prevent fractures at the joint portions, notching is performed so as to form notches (cutouts) at the end portions in the sheet transverse direction of the joint portions for the purpose of reducing stress concentration in the vicinity of the joint portions. In cold rolling processes of steel strips, rolling is performed after notching. Notching is similarly performed in order to remove the defective portions.

One common method of notching is, for example, mechanical shearing into a semicircular shape with no corners, as described in Patent Literature (PTL) 1. Outer edges of the semicircular notches, however, have a uniform curvature, and the widths of the steel strips are smallest at the joint portions, so that the maximum stress occurs at the joint portions.

Due to thinning and high alloying of cold-rolled steel strips in recent years, however, processing strain may be introduced to mechanically sheared areas, and they may become a cause of fractures during rolling, and to address this, methods using laser cutting are described in Patent Literature (PTL) 2 and Patent Literature (PTL) 3.

### CITATION LIST

### Patent Literatures

PTL 1: JP H05-076911 A
PTL 2: JP 2017-080803 A
PTL 3: JP 2017-080806 A

### SUMMARY

### (Technical Problems)

Here, cutting methods according to the conventional technology are sometimes not suitable for cold rolling of brittle and highly alloyed materials, such as silicon steel sheets and high tensile strength steel sheets with high Si and Mn contents. Accordingly, there is room for improvement in preventing fractures (fractures of welded portions) of joint portions in cold rolling and fractures of end portions in which defective portions have been removed or processed.

Even in a case in which laser cutting technology is employed, functions required may differ between a case in which end portions of joint portions between preceding steel strips and succeeding steel strips are cut, and opening portions are machined at any positions from the joint portions, and a case in which defective portions of end portions of the steel strips are removed. There is therefore a need for cutting equipment that can accommodate them.

It would be helpful to provide cutting equipment for steel strips, a cold rolling line, a method of cutting steel strips, and a method of producing steel strips that allow joint portions between stably continuous steel strips to be cut and defective portions of the steel strips to be removed.

### (Solution to Problems)

(1) Cutting equipment for steel strips according to an embodiment of the present disclosure includes:
   a cutting device configured to laser cut a vicinity of a joint portion in which a rear end of a preceding steel strip and a front end of a succeeding steel strip are joined that has been detected by a joint portion detection device, and a vicinity of a defective portion of the steel strips that has been detected by a defect detection device; and
   a control unit configured to acquire a detection signal from the joint portion detection device and the defect detection device and to operate the cutting device based on the detection signal, wherein
   the control unit includes a plurality of modes, including a first cut mode that causes laser cutting in the vicinity of the joint portion, and a second cut mode that causes laser cutting in the vicinity of the defective portion, and
   the control unit operates the cutting device in accordance with one cut mode in the plurality of modes.
(2) As an embodiment of the present disclosure, in (1),
   the first cut mode is a mode that causes the cutting device to execute end portion cutting processing of laser cutting the vicinity of the joint portion and opening machining processing of machining an opening at any position on the steel strips.
(3) As an embodiment of the present disclosure, in (1) or (2),
   the cutting device comprises a plurality of cutting devices provided in a pair at both end portions in a width direction of the steel strips, and
   the plurality of modes includes a multi-device cut mode in which laser cutting is performed by the pair of cutting devices, and a single-device cut mode in which laser cutting is performed by one of the cutting devices.
(4) A cold rolling line according to an embodiment of the present disclosure includes:
   the cutting equipment according to any one of (1) to (3); and
   a cold mill configured to cold roll the steel strips.
(5) A method of cutting steel strips according to an embodiment of the present disclosure is
   a method of cutting steel strips to be executed by cutting equipment for steel strips, the cutting equipment including: a cutting device configured to laser cut a vicinity of a joint portion in which a rear end of a preceding steel strip and a front end of a succeeding steel strip are joined that has been detected by a joint portion detection device, and a vicinity of a defective portion of the steel strips that has been detected by a defect detection device; and a control unit, and the method including:
   a step, performed by the control unit, of acquiring a detection signal from the joint portion detection device and the defect detection device; and
   a step, performed by the control unit, of operating the cutting device based on the detection signal, in accordance with one cut mode in a plurality of modes, including a first cut mode that causes laser cutting in the vicinity of the joint portion, and a second cut mode that causes laser cutting in the vicinity of the defective portion.
(6) A method of producing steel strips according to an embodiment of the present disclosure includes
   a step of cold rolling steel strips after cutting the steel strips according to the method according to (5).

### (Advantageous Effect)

According to the present disclosure, there can be provided the cutting equipment for steel strips, the cold rolling line, the method of cutting steel strips, and the method of producing steel strips that allow the joint portions between the stably continuous steel strips to be cut and the defective portions of the steel strips to be removed.

### BRIEF DESCRIPTION OF THE DRAWINGS

In the accompanying drawings:
FIG. 1 illustrates an example configuration of cutting equipment for steel strips according to an embodiment of the present disclosure;
FIG. 2 illustrates removal of a defective portion; and
FIG. 3 is a flowchart illustrating a method of cutting steel strips according to an embodiment of the present disclosure.

### DETAILED DESCRIPTION

Hereinafter, cutting equipment for steel strips, a cold rolling line, a method of cutting steel strips, and a method of producing steel strips according to an embodiment of the present disclosure will be described with reference to the drawings.

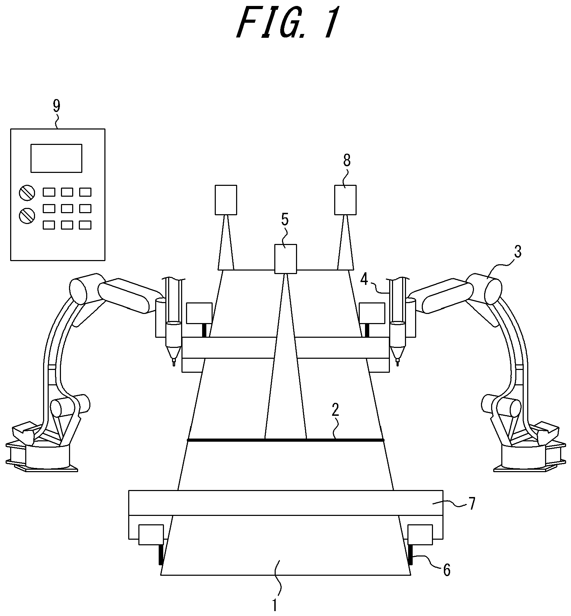

FIG. 1 illustrates an example configuration of cutting equipment for steel strips 1 according to an embodiment of the present disclosure. In the following, a direction of transport of the steel strips 1 may also be referred to as a direction of travel. Furthermore, end portions in a sheet transverse direction may simply be referred to as "end portions."

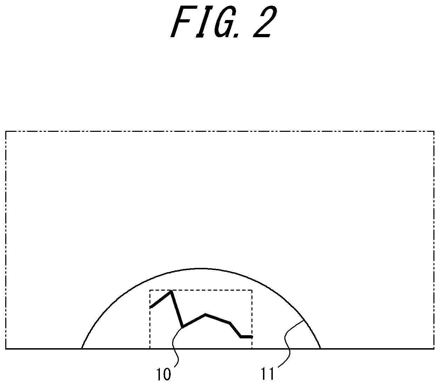

As illustrated in FIG. 1, the steel strips 1 with a joint portion 2, in which a rear end of a preceding steel strip and a front end of a succeeding steel strip are joined, is brought into the cutting equipment for the steel strips 1. The cutting equipment for the steel strips 1 includes a joint portion detection device 5 that detects the joint portion 2, defect detection devices 8 that detect a defective portion 10 (refer to FIG. 2) in the steel strips 1, cutting devices 4 that laser cut the vicinities of the joint portion 2 and the defective portion 10, and a control unit 9. The defective portion 10 is an area in steel strips 1 in which there is a defect, such as a scratch. The control unit 9 is, for example, a cutting equipment operation panel or the like that acquires a detection signal from the joint portion detection device 5 and the defect detection devices 8 and operates the cutting devices 4 based on the detection signal.

In the present embodiment, the cutting equipment for the steel strips 1 includes robot arms 3 with the cutting devices 4 attached to their tips. The robot arms 3 are controlled by the control unit 9, so as to execute laser cutting, such as notching. In the present embodiment, a pair of cutting devices 4 attached to the robot arms 3 is provided on both end sides across the steel strips 1. There may be, however, more than one cutting device 4, as is the case with the present embodiment, or there may be one cutting device 4. Furthermore, in the present embodiment, the robot arms 3 are multi-axis. Accordingly, the positions of the cutting devices 4 can be freely controlled to set an unrestricted cutting track 11 (refer to FIG. 2), thus allowing for, for example, laser cutting in a circular arc.

The cutting equipment for the steel strips 1 may include end portion detection devices 6 that detect the end portions of the steel strips 1, and pinch rolls 7 that sandwich the steel strips 1 so as to prevent vibration of the steel strips 1 during laser cutting.

The joint portion detection device 5 is provided on an upper side of middle portions in the sheet transverse direction of the steel strips 1. The joint portion detection device 5, which can detect features, such as unevenness, on surfaces of the steel strips 1, may be provided at any position without limitations. The joint portion detection device 5 may be a camera that captures an image of the surfaces of the steel strips 1, as is the case with the present embodiment, but it is not limited to any particular device. It is, however, preferable that the joint portion detection device 5 be an imaging device capable of capturing an image so that the joint portion 2 can be determined without being affected by vibration or the like of the steel strips 1. Based on an image from the joint portion detection device 5, the control unit 9, which controls the robot arms 3, can determine the joint portion 2, grasp a cutting range, identify when the cutting devices 4 are to operate, and accurately generate a cutting track 11. For detection of the joint portion 2, a method of detecting a weld line based on differences in brightness of captured images or the like may be used.

The defect detection devices 8 are configured by a plurality of cameras so that both the end portions can be captured. In the present embodiment, the defect detection devices 8 are embodied as cameras that are separate from the joint portion detection device 5. A single camera may, however, be used as the joint portion detection device 5 and the defect detection devices 8. The defect detection devices 8 may also be provided on a back side of the steel strips 1 so that the back side of the steel strips 1 can also be captured to thereby detect the defective portion 10 on the back side of the steel strips 1. Based on images from the defect detection devices 8, the control unit 9, which controls the robot arms 3, can determine the defective portion 10, grasp a cutting range, identify when the cutting devices 4 are to operate, and accurately generate the cutting track 11. As illustrated in FIG. 2, the control unit 9 determines the cutting track 11 necessary to remove the defect, based on the size and position of the defective portion 10 and the feed rate of the steel strips 1, and controls the robot arms 3 to draw the determined cutting track 11. The size of the cutting track 11 is determined based on the size of the defective portion 10 and its positions on the steel strips 1 in a longitudinal direction and a width direction. The cutting track 11 may be semi-circular, for example, with a defined center position and radius size. Here, the control unit 9 may be able to execute the processing of setting the cutting track 11 that can remove the defective portion 10, even according to instructions from an operator (even manually).

The end portion detection devices 6 may be provided on both an upstream side and a downstream side of the cutting devices 4 with respect to the direction of travel of the steel strips 1 and at both ends. Providing the end portion detection devices 6 on the upstream side and the downstream side allows respective end portions of the preceding steel strip and the succeeding steel strip across the joint portion 2 to be accurately detected. The end portion detection devices 6 may be configured by, for example, laser sensors that detect positions based on reflection of a laser, but light sensors or image sensors may also be used. By accurately detecting the end portions of the steel strips 1 with the end portion detection devices 6, cutting at inappropriate positions can be avoided.

The cutting equipment for steel strips 1 may form part of the cold rolling line. In addition to the cutting equipment for the steel strips 1 as described above, the cold rolling line includes at least a cold mill that cold rolls the steel strips 1. The cold mill is provided on the downstream side of the cutting equipment for the steel strips 1 and cold rolls the notched steel strips 1. Here, the cold rolling line may form part of a production facility for steel sheets. The production facility for the steel sheets may further include a line for cutting the steel strips 1, for example, on the downstream side of the cold mill, so as to cut out steel sheets of a desired size.

Here, functions required may differ between a case in which end portions, including joint portions 2, are cut and opening portions are machined at any positions from the joint portions 2 as described above, and a case in which defective portions 10 at end portions of steel strips 1 are removed. However, in conventional cutting equipment, these distinctions have not been made in laser cutting. For example, even though cutting into semicircular shapes is performed in similar manners, to remove the defective portions 10, it is necessary to change the sizes of cutting tracks 11 in accordance with the sizes of the defective portions 10, which requires size adjustment processing that is different from the notching of the joint portions 2. Furthermore, for example, a pair of cutting devices 4 is used to notch the joint portions 2, whereas cutting devices 4 used to remove the defective portions 10 depend on the positions of the defective portions 10. Moreover, other than notching, mechanical shearing may be performed on the steel strips 1 to machine opening portions. The opening portions are created at any positions in the vicinities of joint portions in order to track the joint portions 2 when joining the preceding steel strips and the succeeding steel strips.

In the cutting equipment for steel strips 1, the control unit 9 optimizes the respective types of laser cutting, by clearly distinguishing modes of operation of the cutting devices 4 for the case in which defective portions 10 are removed and for the case in which joint portions 2 are, for example, notched. Specifically, the control unit 9 includes a plurality of modes, including a first cut mode that causes laser cutting in the vicinities of the joint portions 2 and a second cut mode that causes laser cutting in the vicinities of the defective portions 10, and operates the cutting devices 4 in accordance with one cut mode in the plurality of modes. Here, the first cut mode is a mode that causes the cutting devices 4 to execute the end portion cutting processing of laser cutting the vicinities of the joint portions 2, and the opening machining processing of machining openings at any positions on the steel strips 1.

In the first cut mode, the control unit 9 generates cutting tracks 11 using information from the joint portion detection device 5 and the end portion detection devices 6. In the case of end portion cutting in the first cut mode, the shapes are semicircular, and the positions of the circles can be adjusted by aligning the apices of the circles with the joint portions 2 and setting a required length to be removed in the width direction of steel strips 1 at the joint portions 2 to the devices. The joint portions 2 are transported into the cutting equipment, and the pinch rolls 7 sandwich the steel strips 1 to thereby prevent vibration. Necessary positional information is determined from the joint portion detection device 5 and the end portion detection devices 6, and the robot arms 3 operate in accordance with the cutting tracks 11 determined by the control unit 9, so that the cutting devices 4 execute laser cutting. Furthermore, in the case of opening portion machining in the first cut mode, the opening portions are often machined at center portions in the sheet transverse direction of the steel strips 1 and at the joint portions 2, so the positions of the joint portions 2 are set for machining.

In the second cut mode, the control unit 9 generates a cutting track 11 using information from the defect detection devices 8 and the end portion detection devices 6. In the case of end portion cutting in the second cut mode, the shape is semicircular, and the defective portion 10 can be removed by setting the center of the circle at any position in the longitudinal direction of the steel strips 1 and specifying a required length to be removed and a circle radius in the width direction of the steel strips 1 in accordance with the dimension of the defective portion 10.

Additionally, in a case in which there is a plurality of cutting devices 4 provided in a pair at both the end portions in the width direction of the steel strips 1 as in the present embodiment, the control unit 9 may include a mode in which a cutting device 4 to be used is selected. Specifically, the plurality of modes that the control unit 9 has may include, in addition to the aforementioned two cut modes, a multi-device cut mode in which laser cutting is performed by the pair of cutting devices 4, and a single-device cut mode in which laser cutting is performed by one cutting device 4. It is to be noted, however, the multi-device cut mode and the single-device cut mode are not cut modes that are always selected but are modes that are optionally selected. The control unit 9 may combine the multi-device cut mode and the single-device cut mode with the first cut mode and the second cut mode. In one example, when the defective portion 10 is present near each of both the end portions, the control unit 9 may operate the cutting devices 4 by combining the multi-device cut mode with the second cut mode. In another example, when the defective portion 10 is present near one end portion, the control unit 9 may operate a cutting device 4 by combining the single-device cut mode with the second cut mode.

Here, the multi-device cut mode and the single-device cut mode may be used to address faults. When one of the pair of cutting devices 4 fails, the single-device cut mode is set, so as to allow for laser cutting using a functioning cutting device 4. This can prevent long stoppages of the line.

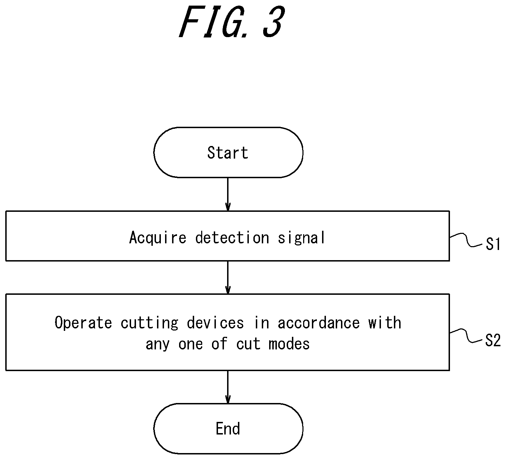

FIG. 3 is a flowchart illustrating the method of cutting steel strips 1 according to an embodiment of the present disclosure. The method of cutting the steel strips 1 is executed by the cutting equipment for steel strips 1 described above. The control unit 9 acquires a detection signal from the joint portion detection device 5 and the defect detection devices 8 (Step S1). Based on the detection signal, the control unit 9 operates the cutting devices 4 in accordance with one cut mode in the plurality of modes (Step S2). The plurality of modes includes the first cut mode that causes laser cutting in the vicinities of joint portions 2 and a second cut mode that causes laser cutting in the vicinities of defective portions 10. The control unit 9 causes laser cutting to be executed in which, for example, cutting of end portions, including the joint portions 2, and removal of the defective portions 10 are distinguished.

In a case in which the cutting equipment for steel strips 1 forms part of the cold rolling line, the method of cutting steel strips 1 may be executed as part of the method of producing steel strips 1. In the method of producing the steel strips 1, a step of cold rolling the steel strips 1 may be executed after the steel strips 1 are cut according to the method of cutting the steel strips 1 described above.

As described above, with the above configurations, the cutting equipment for steel strips 1, the cold rolling line, the method of cutting steel strips 1, and the method of producing steel strips 1 allow the joint portions 2 between stably continuous preceding steel strips and succeeding steel strips to be accurately laser cut and the defective portions 10 to be accurately laser cut. Furthermore, cold rolling can be performed without causing fractures of the joint portions 2.

Although an embodiment of the present disclosure has been described based on the drawings, it is to be noted that various modifications and changes may be easily made by those skilled in the art based on the present disclosure. For example, functions or the like included in each component or the like can be rearranged in a logically consistent manner, and a plurality of components or the like can be combined into one or divided. An embodiment according to the present disclosure can be implemented as a method that is executed by a device, a program that is executed by a processor included in the device, or as a storage medium in which the program is recorded. It is to be understood that these are included within the scope of present disclosure.

The advantageous effects of the contents of the present disclosure will be concretely described below based on examples (experimental examples), although the contents of the present disclosure are not limited to the examples.

### EXAMPLES

In the present example, a blank sheet to be used as an electrical steel sheet containing 3.0 mass% Si with a base metal thickness of 2.0 mm and a sheet width of 1200 mm was used, and an end portions of a defective portion 10 was laser cut. That is, when the defective portion 10 was detected, the control unit 9 immediately switched from the first cut mode to the second cut mode, to thereby laser cut the vicinity of the defective portion 10.

Here, as a comparative example, an operator himself/herself performed cutting using a portable cutting apparatus. The cutting time was 118 seconds in the comparative example, but 20 seconds in the present example.

In the comparative example, the operator needs to take safety measures before starting the cutting operation, and the cutting time is long because it is done manually, so the efficiency of the operation decreases. In contrast, it has been confirmed that the defect cutting function according to the present example significantly improves the cutting time.

### REFERENCE SIGNS LIST

- 1: Steel strip
- 2: Joint portion (welded portion)
- 3: Robot arm
- 4: Cutting device
- 5: Joint portion detection device
- 6: End portion detection device
- 7: Pinch roll
- 8: Defect detection device
- 9: Control unit
- 10: Defective portion
- 11: Cutting track

## Claims

1. Cutting equipment for steel strips, the cutting equipment comprising:
a cutting device configured to laser cut a vicinity of a joint portion in which a rear end of a preceding steel strip and a front end of a succeeding steel strip are joined that has been detected by a joint portion detection device, and a vicinity of a defective portion of the steel strips that has been detected by a defect detection device; and
a control unit configured to acquire a detection signal from the joint portion detection device and the defect detection device and to operate the cutting device based on the detection signal, wherein
the control unit includes a plurality of modes, including a first cut mode that causes laser cutting in the vicinity of the joint portion, and a second cut mode that causes laser cutting in the vicinity of the defective portion, and
the control unit operates the cutting device in accordance with one cut mode in the plurality of modes.

2. The cutting equipment according to claim 1, wherein the first cut mode is a mode that causes the cutting device to execute end portion cutting processing of laser cutting the vicinity of the joint portion and opening machining processing of machining an opening at any position on the steel strips.

3. The cutting equipment according to claim 1 or 2, wherein
the cutting device comprises a plurality of cutting devices provided in a pair at both end portions in a width direction of the steel strips, and
the plurality of modes includes a multi-device cut mode in which laser cutting is performed by the pair of cutting devices, and a single-device cut mode in which laser cutting is performed by one of the cutting devices.

4. A cold rolling line comprising:
the cutting equipment according to any one of claims 1 to 3; and
a cold mill configured to cold roll the steel strips.

5. A method of cutting steel strips to be executed by cutting equipment for steel strips, the cutting equipment comprising: a cutting device configured to laser cut a vicinity of a joint portion in which a rear end of a preceding steel strip and a front end of a succeeding steel strip are joined that has been detected by a joint portion detection device, and a vicinity of a defective portion of the steel strips that has been detected by a defect detection device; and a control unit, and the method comprising:
a step, performed by the control unit, of acquiring a detection signal from the joint portion detection device and the defect detection device; and
a step, performed by the control unit, of operating the cutting device based on the detection signal, in accordance with one cut mode in a plurality of modes, including a first cut mode that causes laser cutting in the vicinity of the joint portion, and a second cut mode that causes laser cutting in the vicinity of the defective portion.

6. A method of producing steel strips, the method comprising
a step of cold rolling steel strips after cutting the steel strips according to the method according to claim 5.
